# EUROPEAN PATENT APPLICATION

(11) **EP 3 489 004 A1**
(43) Date of publication of application: **29.05.2019**
(21) Application number: 18397528.3
(22) Date of filing: 20.11.2018
(51) Int. Cl.: B31B 50/25, B31F 1/08, B31F 1/00, B65H 45/28, B65D 6/06, B27D 1/04, B32B 21/04, B31B 105/00, B31B 120/60, B31B 110/35

(54) **PACKAGING PLYWOOD SLEEVE**

(30) Priority: 22.11.2017 FI 20176041
(71) Applicant: Ekohub Oy, 15100 Lahti (FI)
(72) Inventor: Aittamaa, Teemu, 31600 Jokioinen (FI)
(74) Representative: Berggren Oy, Tampere

(57) **Abstract**

The present application provides a method for manufacturing a blank for forming a packaging plywood sleeve for wrapping a package, the method comprising providing a plywood sheet having a thickness in the range of 0.1-2.0 mm and comprising at least two plies, and cutting at least one fold line to the plywood sheet by cutting through less than all the plies of the plywood sheet. The present application also provides a blank for forming a packaging plywood sleeve, a method for manufacturing a packaging plywood sleeve and a packaging plywood sleeve.

## Description

### Technical field

The present application relates to packaging plywood sleeves for wrapping package, and to methods for manufacturing the packaging plywood sleeves. The present application also relates to blanks for forming a packaging plywood sleeve, and to methods for manufacturing the blanks.

### Background

Package sleeves, in general tubular package sleeves, may be used to wrap one or more packages. Such package sleeves are usually formed from cardboard or plastic, which are relatively easy to process to obtain fold lines. Cardboard can be creased to obtain one or more fold line, practically without damaging the structure of the cardboard.

However, the package sleeves obtained from cardboard and plastics are mass products with modest appearance. For special products, such as gifts and expensive products, it would be desirable to use material having a special, even luxurious, appearance.

### Summary

It was found out that plywood having a smooth surface and wooden appearance can be formed into tubular package sleeves, which could be used for packing products. The problem with plywood is that it is very challenging material to process and it may crack easily. Forming fold lines by creasing is not possible, at least if a finished appearance is desired. During creasing the outermost ply remains continuous which does not result in acceptable fold. Specific thin plywood as starting material and specific processing techniques were needed to obtain a final product with high quality and desired properties.

The present application provides a method for manufacturing a blank for forming a packaging plywood sleeve for wrapping a package, the method comprising
- providing a plywood sheet having a thickness in the range of 0.1-2.0 mm and comprising at least two plies,
- cutting at least one fold line to the plywood sheet by cutting through less than all the plies of the plywood sheet.

The present application also provides a blank for forming a packaging plywood sleeve for wrapping a package, the blank comprising a plywood sheet, the ends of the plywood sheet being joinable together to provide a continuous plywood sleeve, wherein the plywood sheet has a thickness in the range of 0.1-2.0 mm and wherein the plywood sheet comprises at least one fold line obtained by cutting through an outermost ply of the plywood sheet, but through less than all the plies of the plywood sheet. Therefore the at least one fold line may be obtained by cutting through at least the outermost ply. The outermost ply is the ply which remains at the outer surface of the final folded product. The present application also provides a blank for forming a packaging plywood sleeve for wrapping a package, the blank comprising a plywood sheet, the ends of the plywood sheet being joinable together to provide a continuous plywood sleeve, wherein the plywood sheet has a thickness in the range of 0.1-2.0 mm and wherein the plywood sheet comprises at least one fold line obtained by cutting through less than all the plies of the plywood sheet.

The present application also provides a packaging plywood sleeve for wrapping a package comprising a plywood sheet, the ends of the plywood sheet being joined together to provide a continuous plywood sleeve, obtained from the blank.

The present application also provides a packaging plywood sleeve for wrapping a package comprising a plywood sheet, the ends of the sheets being joined together to provide a continuous plywood sleeve, wherein the plywood comprises at least one fold line obtained by cutting through less than all the plies of the plywood sheet, especially through the outermost ply of the plywood.

When specific thin plywood having a low thickness was used, it was possible to obtain package sleeves which are applicable to most packages and have the desired properties. For example the package sleeves are foldable, collapsible, flexible and have a perfect and finished appearance for gift and luxury products, for example. The products are biodegradable. Especially the fold line remains clear-cut when thin plywood is used. The plywood as natural material is ideal for such products, as the natural wooden surface of the plywood is always unique in every single sleeve. Wood as material provides a specific texture and feel when touched. Identical appearance, feel and visual effect is practically impossible to obtain using synthetic materials.

It was possible to form fold lines to the thin plywood by using the specific methods of the embodiments so that the plywood was foldable along the fold line, and the folding did not damage the appearance of the plywood. The edges of the fold line remained clean and no visible cracking occurred.

It was also possible to obtain desired printing or imaging on the surface of the plywood sleeve for example by printing, embossing, debossing, pyrography and/or hot foiling the plywood sheet. Such imaging may be carried out for specific purposes, for example a logo or a company name may be provided on packaging sleeves for gift products. Further, it was also possible to dye the plywood so that the natural wood surface, such as the grains, are visible.

### Brief description of the figures

Figure 1 shows a schematic example of a blank for forming a packaging plywood sleeve for wrapping a package
Figure 2 shows a schematic example of a packaging plywood sleeve for wrapping a package
Figure 3 shows a photo of a fold made along the graining direction of the outmost ply
Figure 4 shows a photo of a thin plywood cut with a knife at the outermost ply
Figure 5 shows a photo of a fold made along the fold line of Figure 4
Figure 6 shows a photo of a membrane formed by the adhesive between the plies
Figure 7 shows a photo of a fold line formed into 4-plied 0.9 mm plywood
Figure 8 shows a photo of examples of package sleeves with fold lines made to the outermost ply of packaging sleeves perpendicular to the graining (left) and along the graining (right)
Figure 9 shows a photo of a package sleeve wrapped around a package
Figure 10 shows an example of a three-plied plywood, wherein only the outermost ply has been cut to form a fold line
Figure 11 shows a cutting example, wherein a cutting blade cuts through two plies
Figure 12 shows a cutting example, wherein a cutting blade cuts through one ply
Figure 13 shows a cutting example, wherein a cutting blade cuts through one ply and the plywood includes a supporting fibrous layer

### Detailed description

The packaging sleeves described herein are formed from plywood sheets, which are cut to obtain fold lines and optionally a desired shape. These processed sheets may be called blanks, which may be then joined from their opposite ends and folded along the fold lines to form the package sleeve, which is practically tubular. The tubular package sleeve is usually adapted to fit a specific package, i.e. to wrap the package tightly so that the sleeve remains wrapped on the package.

Plywood is an engineered wood product in a form of a sheet material manufactured from thin layers or plies of wood veneer that are glued together with adjacent layers having their wood grain rotated up to 90 degrees to one another. The plywood discussed herein, such as a plywood sheet, contains at least two plies. However, in most cases a plywood contains at least three plies. In one specific example a plywood contains only three plies. The plywood may consist of the plies and the adhesive layer(s) disclosed herein, so between two plies there may be only an adhesive layer. The plywood may also comprise other layers, such as fibrous layers, so in such case between two plies there may be an adhesive layer and a fibrous layer, or an adhesive layer comprising fibers. The plywood may comprise only the layers disclosed in the examples herein, especially between the plies.

In general plywood contains adhesive, which is often called as resin, and wood fibre sheets which may be called as veneers or plies, and it is present as composite material. The alternation of the grain in the plies is called cross-graining and has several benefits. It reduces the tendency of wood to split. It also reduces expansion and shrinkage, providing improved dimensional stability, and it makes the strength of the panel consistent across all directions. There is usually an odd number of plies, so that the sheet is balanced and warping is reduced. Because plywood is bonded with grains running against one another and with an odd number of composite parts, it is very hard to bend it perpendicular to the grain direction of the surface ply.

Plywood may be made of for example softwood, hardwood or tropical wood. Softwood plywood is usually made either of cedar, Douglas fir or spruce, pine, and fir (collectively known as spruce-pine-fir or SPF) or redwood and it is typically used for construction and industrial purposes.

Hardwood plywood may be made out of wood from angiosperm trees and used for demanding end uses. Hardwood plywood is characterized by its excellent strength, stiffness and resistance to creep. It has a high planar shear strength and impact resistance, which make it especially suitable for heavy-duty floor and wall structures. Oriented plywood construction has a high wheel-carrying capacity. Hardwood plywood has excellent surface hardness, and damage- and wear-resistance.

Tropical plywood may be made of mixed species of tropical wood, such as originally from the Asian region, but also from African and South American countries. Tropical plywood is superior to softwood plywood due to its density, strength, evenness of layers, and high quality. It is usually sold at a premium in many markets if manufactured with high standards.

Examples of veneers or plies with a showy appearance, which may be used in the plywoods, include mahogany, cedar, such as aromatic cedar or Spanish cedar, cherry, chestnut, birch, such as natural birch or white birch, pine, poplar, red adler, oak, such as red oak or white oak, rosewood, teak, walnut, maple, wenge, yew, and zebrawood. Plywood may contain one or more veneer(s) with a desired appearance, and it may further contain one or moe veneers of other wood. For example the outermost veneer may be different than the other veneers.

One type of plywood is high-strength plywood, also known as aircraft plywood, which may be made from mahogany, spruce and/or birch using adhesives with an increased resistance to heat and humidity. In general, aircraft plywood is available in thicknesses of 3 mm (3 ply construction) and upwards. In some cases aircraft plywood uses veneers of 0.5 mm.

In the present embodiments so called thin plywood is used, which may have a thickness in the range of 0.1-2.0 mm, for example 0.4-1.0 mm. It is thinner than plywoods used for construction and even thinner than the aircraft plywood. The material can be bent to some extent, but folding the thin plywood causes the material to crack. Therefore it is challenging to form continuous angled shapes from thin plywood.

However in the present embodiments it was found out how to treat thin plywood to obtain foldable structures, such as collapsibly foldable structures. Such structures may be used for forming wraparound products, i.e. products that can be wrapped around a target or substrate, such as a package. Such products may be called as plywood sleeves, such as packaging plywood sleeves. The sleeves contain wall panels foldably connected to each other. The sleeve comprises at least one continuous folding edge formed to the sleeve wall.

The packaging plywood sleeve for wrapping a package described herein is collapsibly foldable, preferably refoldable, i.e. it can be folded into a flat structure, which can save space and allows packing, storing and/or transporting a number of products in small space. Similarly the formed blanks may be packed, stored and/or transported in small space in piles. When a plurality of such products are piled and especially packed, they are safe from mechanical damage and can be handled safely. The blank may be in a form of an elongated sheet, so that the ends of the elongated sheet are joinable or connectable to each other to form a continuous ring, band or sleeve.

The present application provides a method for manufacturing a blank for forming a packaging plywood sleeve for wrapping a package, the method comprising providing a plywood sheet, and cutting at least one fold line to the sheet.

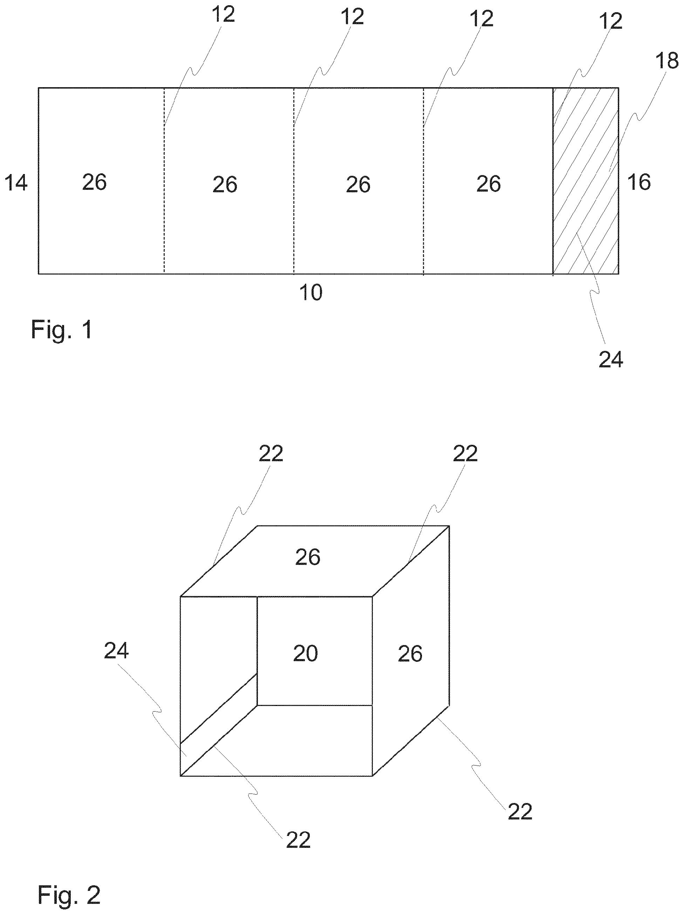

The present application also provides a blank 10 for forming a packaging plywood sleeve for wrapping a package, which blank may be obtained with the methods described herein. An example of such a blank is shown in Figure 1. The blank comprises a plywood sheet having a thickness in the range of 0.1-2.0 mm and comprising at least two plies, and comprising at least one fold line formed by a cut or a discontinuity line or plane through less than all the plies of the plywood sheet.

The ends 14, 16 of the blank 10 may be joined together by using one or more adhesive(s) 18. The ends are the opposite ends of an elongated blank, in general the opposite ends in the direction of the longest dimension, i.e. the length, of the blank. The length of the blank depends on the desired dimensions of the packaging sleeve to be formed, or the dimensions of the package to be wrapped, and may be in for example the range of 20-200 cm, such as 20-100 cm or 20-80 cm.

The method for manufacturing a blank for forming a packaging plywood sleeve for wrapping a package comprises providing a plywood sheet having a thickness in the range of 0.1-2.0 mm and comprising at least two plies. The plywood may have a thickness in the range of 0.1-1.5 mm, such as in the range of 0.1-1.0 mm, in the range of 0.3-1.0 mm, in the range of 0.4-2.0 mm, in the range of 0.4-1.5 mm, or in the range of 0.4-1.0 mm. In one embodiment the plywood has a thickness in the range of 0.3-0.8 mm. In one embodiment the plywood has a thickness in the range of 0.4-0.7 mm. In one embodiment the plywood has a thickness in the range of 0.4-0.6 mm. These may be also the thicknesses of the walls of the final product. Examples of plywood thicknesses include 0.4 mm, 0.45 mm, 0.5 mm, 0.7 mm and 2.0 mm for 3-plied plywood, and 0.6 mm, 0.65 mm and 0.9 mm for 4-plied plywood.

In one embodiment the plywood comprises 2-5 plies. In another embodiment the plywood comprises at least three plies, such as 3-5 plies, 3-4 plies, or 4-5 plies, or three plies, four plies or five plies. Plywood comprising at least three plies is structurally more stable, rigid and wear resistant than plywood comprising two plies. Such plywood can be more reliably formed into package sleeves and products with good quality and excellent appearance are formed.

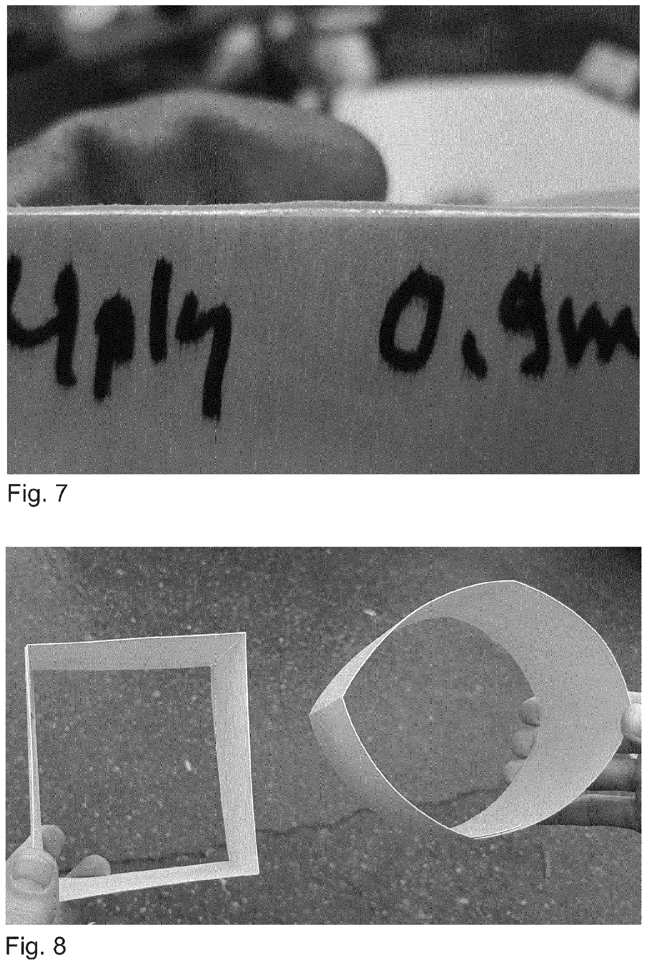

In one specific embodiment the plywood comprises three plies. In one specific embodiment the plywood comprises three plies and has a thickness in the range of 0.3-0.8 mm, such as 0.4-0.6 mm. Such thin plywood is flexible and it has a good appearance, but it is still durable and can be processed with the methods described herein. When the thickness is 0.8 mm or less, or 0.7 mm or less, or even 0.6 mm or less, the cut line remains clear-cut when the plywood is folded, as was demonstrated by the comparison tests. On the other hand, even with a plywood thickness of 0.9 mm or more the thickness may cause problems. As can be seen from Figure 7, wherein a 4-plied plywood having a thickness of 0.9 is cut though the uppermost ply, the uncut plies are so thick together that they cause the formed fold to open is respect of the upper ply and the appearance of the fold may not be acceptable for all purposes.

The method comprises cutting at least one fold line 12 to the sheet by cutting through less than all the plies of the plywood sheet. A discontinuity line or plane across one or more ply or plies is formed. This means that at least one ply is not cut, i.e. it is left unmodified or uncut. For example one, two, three or four plies, in general the outermost plies in the final product, are cut. It is also preferable that the adhesive between the cut and uncut plies is not cut, i.e. the adhesive is left unmodified or uncut, and/or the adhesive is continuous.

In one embodiment the method comprises cutting at least one fold line to the sheet by cutting through only an outermost ply of the plywood sheet. Therefore only one ply is cut, which provides in most cases the best result, in terms of appearance and mechanical properties of the formed fold. This is the case especially for three-plied plywood.

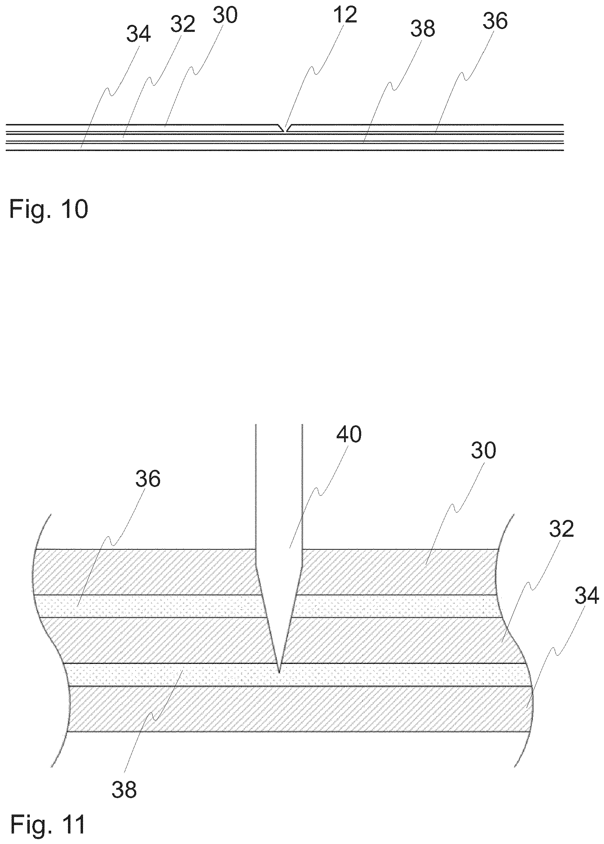

Such example is shown in Figure 10. A plywood is provided having three plies, a first ply 30, a second ply 32 and a third ply 34, which is the outermost ply of the plywood sheet. Between the first 30 and second 32 plies there is a first layer of adhesive 36, and between the second 32 and third 34 plies there is a second layer of adhesive 38. The construction does not include any other layers between the plies. A fold line 12 is cut though the outermost ply 34, so the first 30 and the second 32 plies are not cut. The second adhesive layer 38 may or may not be cut when forming the fold line 12, or it may be cut partially.

A cutting example is shown in Figure 11, wherein a cutting blade 40 cuts through two plies 30, 32. One ply 34 is not cut. Between the plies 30, 32, 34 there are only adhesive layers 36, 38 but no other layers.

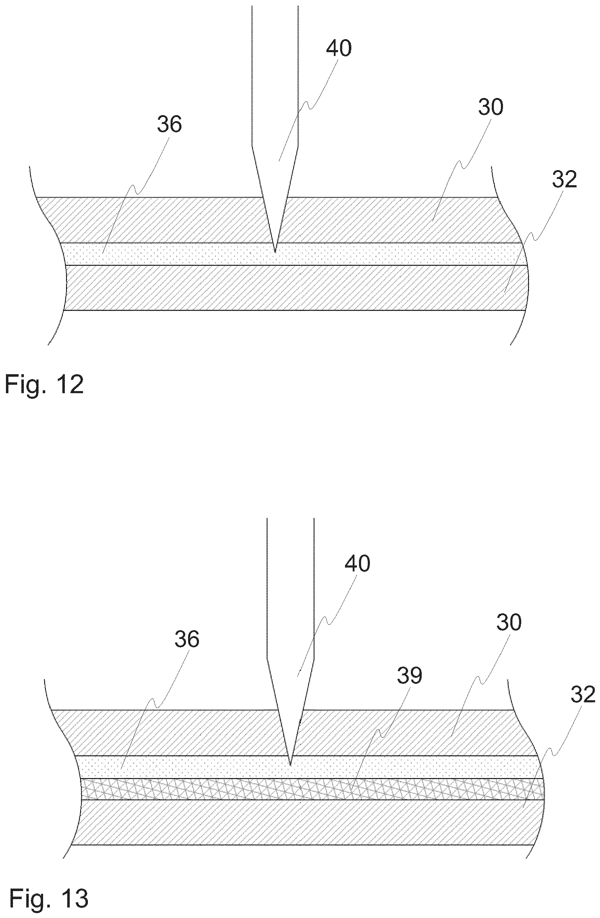

Another cutting example is shown in Figure 12, wherein a cutting blade 40 cuts through one ply 30. One ply 32 is not cut. Between the plies 30, 32 there is only an adhesive layer 36 but no other layers.

Another cutting example is shown in Figure 13, wherein a cutting blade 40 cuts through one ply 30 and the plywood includes a supporting fibrous layer 39 below an adhesive layer 36. One ply 32 and the fibrous layer 39 are not cut.

The number of the fold lines depends on the final use. For example for regular package boxes four fold lines 12 are required to obtain a tetragonal package sleeve having four sides or side wall panels 26, as shown in Figures 1 and 2. Other number of fold lines may be used for specific packages, for example two fold lines for sheets or envelope types of packages, wherein two side panels are formed.

The method may also include cutting a blank from the plywood sheet. A blank having a desired size, in general a length and a width, is obtained. Alternatively a pre-cut blank may be provided. The blank may have a width in the range of 3-30 cm, and/or a length in the range of 20-200 cm.

The cutting, both cutting the blanks and/or cutting the fold lines, may be carried out by using different methods, such as die-cutting, cutting with a blade, knife or the like, cutting with a CNC machine, cutting with a laser, cutting with a plotter, cutting with a computerized mat cutter (CMC) or a waterjet, or by sawing. Each cutting method provides a specific cutting line, and by examining the cutting line for example microscopically it is possible to detect the manufacturing method. Especially CNC, CMC and plotter enable very high control of the cutting depth, which is advantageous when cutting thin plywood.

In one embodiment the method comprises die-cutting the at least one fold line. Die-cutting refers to a method comprising using a die to shear the plywood. Die cutting may be carried out on flatbed or rotary presses. Rotary die cutting may be done inline with printing. Rotary die cutting uses a cylindrical die on a rotary press. A long sheet or web of material is fed through the press into an area known as a "station" which holds a rotary tool that will cut out shapes and/or makes fold lines. Dinking uses special dies called dinking dies, or hollow cutters. The edges of the dies are usually beveled about 20° and sharpened. The die may be pressed into the material with a hammer or a mechanical press.

It was found out that die-cutting resulted in best quality cut and high production rate could be obtained. With one die-cutting punch it is possible to form a plurality of blanks from a plywood sheet at once, for example a grid of 4 x 4 pieces, so a blank or a plurality of blanks having desired size and shape can be obtained. Any unevenness, such as undulant shapes in the plywood, does not have an effect to the process or to the result as the whole plywood sheet is pressed with the tool. Further, it is possible to cut the fold lines in the same process by die-cutting. In one embodiment the method comprises die-cutting the blank from the plywood sheet. In one embodiment the method comprises die-cutting the blank from the plywood sheet and the fold lines to the blank, for example at the same time or subsequently. This requires a specific die, or the use of two or more dies, at least one for cutting the blanks and at least one for cutting the fold lines.

Another option to cut the blanks and/or the fold lines is to use CNC machine. CNC refers to computer numerical control, which further refers to automation of machine tools by means of computers executing preprogrammed sequences of machine control commands. A CNC machine may be a cutter, such as a CNC router, which is a computer-controlled cutting machine. A CNC wood router is a CNC router tool that creates objects from wood. CNC stands for computer numerical control. The CNC works on the Cartesian coordinate system (X, Y, Z) for 3D motion control. Parts of a project can be designed in the computer with a CAD/CAM program, and then cut automatically using a router or other cutters to produce a finished part.

Cutting by a CNC machine or by die-cutting yields a perfected cutting result with excellent appearance. However, the production speed with a CNC machine is slower. Further, it may not be possible to fully control the depth wise cutting of plywood having unevenness.

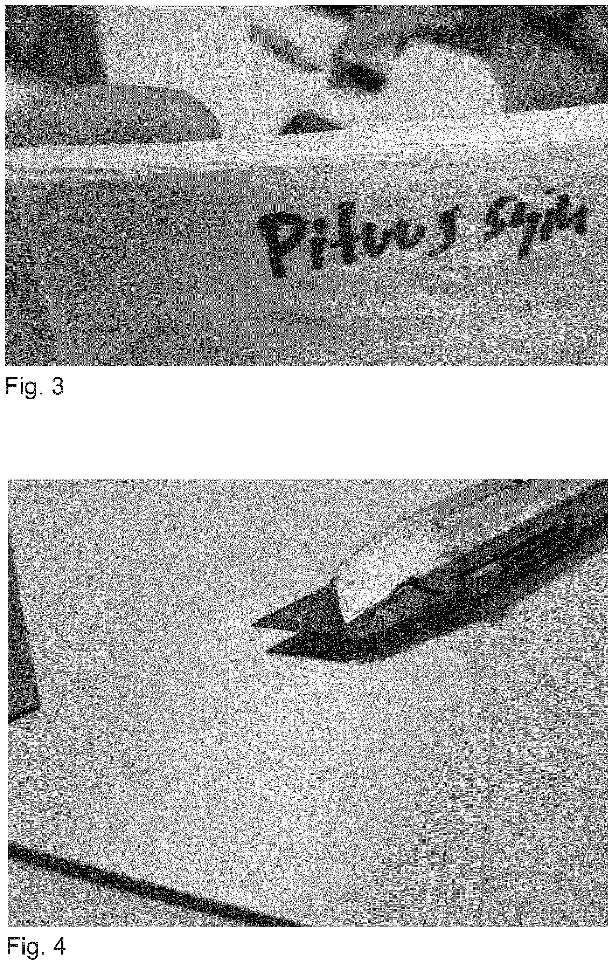

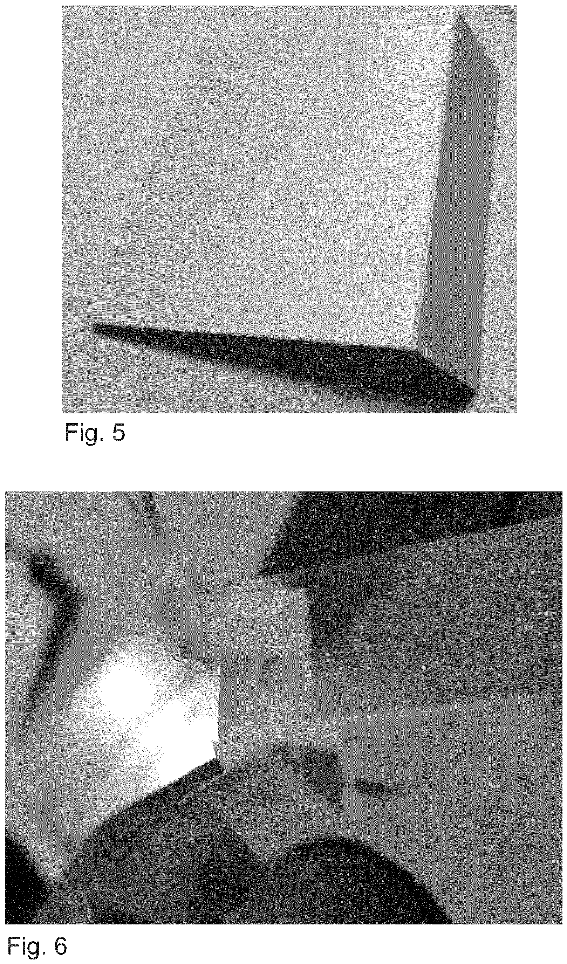

Cutting with a blade, knife or the like, preferably by slashing, may be carried out manually or the cutting may be automated. Such cutting may yield a good appearance, but the production speed is usually slow. Figure 4 shows a photo of a thin plywood cut with a knife. Figure 5 shows a fold made along the fold line cut by the knife.

In one embodiment of the method the at least one fold line is perpendicular to the grains, or more particularly to the direction of the grains, of the outermost ply. In general this means that the grains of the outermost ply are substantially parallel to the lengthwise direction of an elongated blank. If the outermost ply is cut along the graining direction of the outmost ply, the outermost ply may break when folded and the fold line is not acceptable, as can be seen in Figure 3. Figure 8 shows examples of fold lines made to the outermost ply perpendicular to the graining (left) and parallel to the graining (right). The difference in the formation of the package sleeve can be seen. Also the dimensional stability is better when the fold line is perpendicular to the graining of the cut ply. Further, it was noticed that when an inner uncut ply, for example the middle ply in a three-plied plywood, has graining direction parallel to the cut line in the outermost ply, the inner ply may support the folding and provide durability.

In one example a cross-banded thin plywood made from birch veneers throughout and faced with a joint-free birch veneer is used. Such material provides a surface which is natural, light and smooth, and therefore desirable for use in package wrappings. The birch thin plywood's surface can be left in its natural state to show the appearance of the birch veneer or it can be waxed, painted, oiled or lacquered. Also other plywood materials may be provided as joint-free, and they can be treated in similar way. In one example the plywood, or at least the surface of the plywood, or the outermost ply, is dyed, for example with black or other dark or coloured dye. Dying may highlight the grains and/or other surface details of the wood. The dyed plywood may be further decorated, for example by hot foiling.

In one example the birch thin plywood is coated with other wood veneer such as mahogany, oak, ash or walnut, or other veneers discussed in previous. Hot pressed coating such as painting films can also be applied to the surface. The thin plywood may be manufactured using adhesive films to prevent the adhesive, such as glue, bleeding onto the surface.

In one embodiment the plywood contains fiber reinforced adhesive between the plies. Reinforced adhesive may enhance the durability of the fold line.

A typical adhesive material for attaching the plies of plywood is a liquid, thermosetting adhesive material containing synthetic resin, such as urea resin, melamine resin or phenolic resin, DAP resin, unsaturated polyester resins, alkyd resins, epoxy resins or denaturalized, copolycondensed or mixed resin obtained by using the synthetic resin. Also other suitable adhesives or resins may be used. Examples of suitable adhesives include polyethylene and derivatives thereof, polypropylene and derivatives thereof, polylactic acid (PLA) and derivatives thereof, polyurethane adhesives and polyethylene terephthalate (PET) and derivatives thereof. Polyethylene-based adhesives were found especially advantageous for providing good flexibility and tensile strength. Polylactic acid based adhesives, especially in combination with natural fibers, such as hemp, flax and/or cotton, were found especially advantageous for providing high tear strength to the fold lines, and the materials are also biodegradable,.

In one example the thin plywood's veneers are glued with a special adhesive containing pulp and/or textile fibres. In one embodiment the adhesive between the plies contains pulp and textile fibers. There may be one or more adhesive layer(s) and one or more fibrous layer(s) between two plies, which are separate layers. The fibrous layer may contain one or more binder(s), which may be adhesive, which may be the same or different as in any other adhesive layer. The fibrous layers discussed herein do not refer to the plies. Such reinforced adhesive and/or layer produces a product which is both stable and flexible. Figure 6 shows how the adhesive between the plies forms a membrane which keeps the folded plywood together. The uppermost ply has been partly removed to reveal the adhesive membrane. Figure 13 shows an reinforcing fibrous layer 39 between two plies, wherein the plywood also includes an adhesive layer 36 between first ply 30 and the fibrous layer 39, which is next to second ply 32. Preferably the fibrous layer is not cut in the methods disclosed herein. In one embodiment the plywood contains an adhesive layer and a fiber reinforced adhesive layer between two plies, preferably wherein the fiber reinforced adhesive layer is not cut.

The fiber may be any suitable fiber, such as textile fiber, natural, synthetic or semi-synthetic, woven or non-woven, for example one or more selected from polyester, nylon, rayon, polypropylene, aromatic polyamide, cotton and acetate, or glass woven fabric (including spunbond), or fiber glass or aromatic polyamide. Other fibers include natural fibers such as wood or vegetable fibers, such as pulp or paper, such as kraft paper, hemp fibers, flax fibers, cotton fibers, or other cellulosic fibers or fibers containing cellulose, which may or may not include lignin, or carbon fibers, or combinations thereof. In one example the pulp is wood pulp. Natural fibers are preferred, as they are biodegradable and provide desired mechanical properties.

The thin plywood is suitable for printing or for forming images or figures with another method. The blank may be provided as printed or otherwise illustrated or decorated containing one or more texts, images or figures formed by printing or by another method, or it may be provided without such prints, texts, images or figures, for example as a printable blank, which contains a printable surface. A printable surface is a surface of the plywood, in general the surface which forms the outer surface of the package sleeve, which may receive printing, i.e. it does not contain such a coating or other ingredients which would prevent printing ink or the like attaching to the surface. In the latter case the blank may be printed or imaged afterwards, for example at separate premises and/or by separate operator.

In one embodiment the method comprises printing, embossing, debossing, pyrography and/or hot foiling the plywood sheet, or the blank. Printing is a process for reproducing text and/or images using a master form or template. The printing as used herein may include the traditional printing methods and also embossing, debossing, hot foiling or other suitable methods for forming the text and/or images onto the plywood or the blank. The printing may be for example screen printing or offset printing. One or more suitable printing inks can be used.

Embossing and debossing are processes of creating either raised or recessed relief images and designs in material, such as thin plywood. An embossed pattern is raised against the background, while a debossed pattern is sunken into the surface of the material. Embossing or debossing may be applied only to thin plywood. When the thickness of the plywood increases embossing or debossing is no longer possible.

Pyrography or pyrogravure is the art of decorating wood with burn marks resulting from the controlled application of a heated object such as a poker. It is also known as pokerwork or wood burning. Pyrography may be carried out by using solid-point burners, wire-nib burners, or laser cutters.

Hot foiling or hot foil stamping is a process of using heat and pressure to apply metallic foil or holograms to materials such as thin plywood. Hot foiling may include simple flat foil stamping, deep embossing or embossing combined with foil stamping, hologram and/or holographic foil application or foil stamping combined with micro and/or structural embossing. Also combinations of printing, illustrating or decorating methods disclosed herein may be used.

The present application provides a packaging plywood sleeve 20 for wrapping a package comprising a plywood sheet, the ends of the plywood sheets being joined together to provide a continuous plywood sleeve or ring, wherein the plywood sheet comprises at least one fold line 22, obtained from the blank described herein. In the final product, especially when the product is wrapped on a package, the fold line 22 is a folded fold line.

The plywood ring as used herein refers to a continuous structure, such as a sleeve, which may be called tubular, which however does not have to be completely round, especially when the plywood sleeve is folded at the fold lines. Figure 8 shows examples of such continuous plywood structures.

The ends 14, 16 of the plywood sheet 10 may be joined together by using one or more adhesive(s) (18). In general the ends are the opposite ends of an elongated sheet, in general the opposite ends of the longest dimensions. The end are joined together by a connecting part 24 at one end 16 which overlaps with the other end 14, or the wall panel at the other end 14, as can be seen in Figure 2.

The adhesive may be applied to the blank 10, or be included in the blank. At the end of the blank there may be a connecting part 24 between one end of the blank 16 and the closest fold line 12, which contains the adhesive 18 and which is arranged to be joined to the opposite end 14 of the blank, as can be seen in Figure 1. This overlapping part 24 may contain the adhesive at the whole area or at a partial area. This part 24 is typically shorter than one full side or panel 26 of the final packaging sleeve 20. In the final continuous sleeve the connecting part 24 remains inside the sleeve.

The adhesive may be present as one or more area(s), such as a strip or a band 18 having a width of 0.5-50 mm, at one or both ends of the blank. The adhesive may be also applied to the blank when forming the final packaging plywood sleeves. The adhesive may be applied as an adhesive tape, such as two-sided self-adhesive tape, which may be covered by a removable release liner at one side. The adhesive may be applied as liquid or paste form, such as glue, for example hot-melt adhesive, contact adhesive, pressure sensitive adhesive, reactive adhesive, heat-curable adhesive or multi-part adhesive. If an adhesive is used which requires action, such as activatable adhesive, to provide adhesive effect, for example pressure sensitive adhesive, two-part adhesive, heat-curable adhesive, UV-curable adhesive, or adhesive covered by a release liner, it is possible to include the adhesive in the blanks and store the final blanks for example in piles without the separate blanks attaching to each other. Such blanks are in ready-to-use form and no further process steps except folding and joining the ends of the blanks, including activating the inactive adhesive, is required.

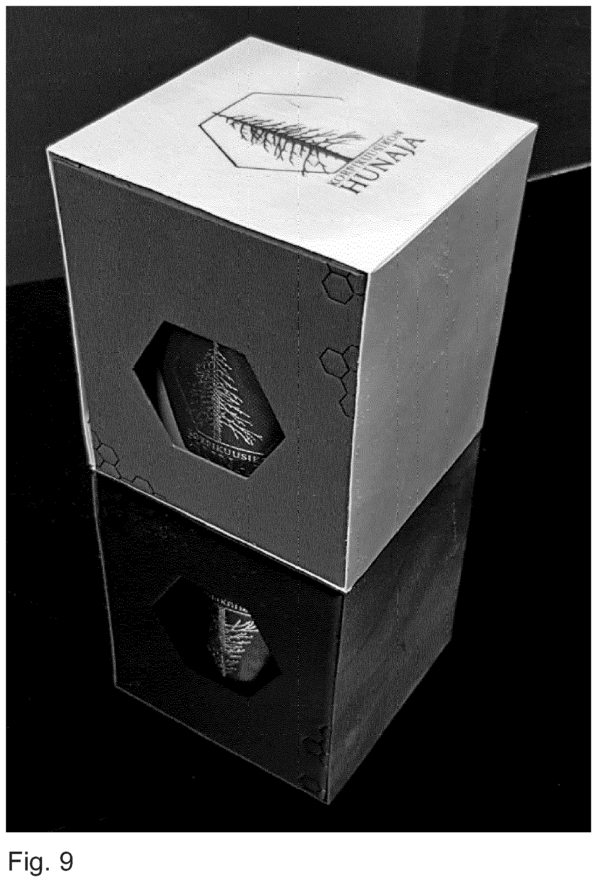

Figure 9 is a photo of a package sleeve wrapped around a cardboard package containing a jar of honey branded as "Korpikuusikon hunaja". The brand mark containing text and an image is pyrographically burned onto one side of the plywood sleeve.

A method for manufacturing a packaging plywood sleeve for wrapping a package comprises
- providing the blank 10 described herein,
- folding at the at least one fold line 12, 22, and
- joining the ends 14, 16 of the blank together to obtain the packaging plywood sleeve. A continuous plywood sleeve or ring is obtained, which may be folded and unfolded. Joining the end of the blank may include applying adhesive, or activating adhesive already present in the blank. Activating the adhesive may include applying pressure in case of pressure sensitive adhesive, removing a release liner, applying heat in case of heat-curable adhesive, applying UV light in the case of UV-curable adhesive, applying reactive agent, for example contacting two different adhesive components at opposite ends of the blank in case of two-part adhesive. The method for forming the packaging plywood sleeve may be combined with the method for manufacturing the blank, as described herein.

One embodiment provides a method for manufacturing a packaging plywood sleeve for wrapping a package, the method comprising
- providing a plywood sheet having a thickness in the range of 0.1-2.0 mm and comprising at least two plies,
- cutting at least one fold line to the plywood sheet by cutting through less than all the plies of the plywood sheet to obtain a blank 10,
- folding at the at least one fold line 12, 22, and
- joining the ends 14, 16 of the blank together to obtain the packaging plywood sleeve.

In one example a folded packaging plywood sleeve is obtained, such as a collapsible folded or foldable packaging plywood sleeve.

### Examples

### Example 1.

Three-plied thin plywoods were processed by cutting and creasing. The cutting was carried out through different plies by die-cutting. Creasing was carried out for all the plies at once. The upper ply remains as the outer ply in the final sleeve. The plywoods were fold along the fold line several times and the durability and the appearance of the folds were tested and evaluated at scale 1-10 (1=weak, 10=excellent). The folds were also commented. The results are combined in Table 1.

**Table 1. Fold line tests**

| **Test** | **Ply** | **Cut ply** | **Uncut ply** | **Creased ply** | **Durability** | **Fold line appearance** | **Comments** |
|---|---|---|---|---|---|---|---|
| 1 | Upper | x | | | 10 | 10 | Nice and even fold |
| | Middle | | x | | | | |
| | Lower | | x | | | | |
| 2 | Upper | x | | | 5 | 5 | Fold is weak and big |
| | Middle | x | | | | | |
| | Lower | | x | | | | |
| 3 | Upper | | x | | 4 | 1 | Upper ply ruptures when folding |
| | Middle | | x | | | | |
| | Lower | x | | | | | |
| 4 | Upper | | x | | 1 | 3 | Upper ply ruptures when folding |
| | Middle | x | | | | | |
| | Lower | x | | | | | |
| 5 | Upper | | | x | 5 | 5 | Upper ply ruptures when folding |
| | Middle | | | x | | | |
| | Lower | | | x | | | |

### Example 2.

Different cutting methods die-cutting, CNC cutting and hand cutting by a knife were compared. The results are shown in Table 2.
18

**Table 2. Comparison of different cutting methods**

| | **End Product Properties** | | | **Process measurements** |
|---|---|---|---|---|
| **Production method** | **Durability** | **Fold line appearance** | **Foldability** | **Time to produce 16 blank units (minutes)** |
| Die-cutting | 10 | 10 | 10 | 0.1 |
| CNC | 7 | 8 | 10 | 6 |
| Hand cutting | 8 | 9 | 10 | 55 |

### Example 3.

Different plywoods having different thicknesses and numbers of plies were tested. The plywoods were cut by die-cutting. The results are shown in Table 3.

**Table 3. Comparison of different plywoods.**

| **Plywood thickness (mm)** | **Number of plies** | **Durability** | **Fold line appearance** | **Foldability** | **Comments** |
|---|---|---|---|---|---|
| 0.4 | 3 | 10 | 10 | 10 | Nice and even fold |
| 0.45 | 3 | 10 | 10 | 10 | Nice and even fold |
| 0.5 | 3 | 10 | 10 | 10 | Nice and even fold |
| 0.6 | 4 | 9 | 9 | 9 | Good fold - Bit too large by visual evaluation |
| 0.65 | 4 | 9 | 8 | 7 | Good fold - Bit too large by visual evaluation |
| 0.7 | 3 | 8 | 8 | 7 | Good fold - Bit too large by visual evaluation |
| 0.9 | 4 | 8 | 7 | 6 | Large and uneven fold |
| 2 | 3 | 5 | 4 | 3 | Remarkably large fold. looks partially broken |
| 4 | 3 | 0 | 0 | 0 | Folding impossible - fold breaks |

## Claims

1. A method for manufacturing a blank for forming a packaging plywood sleeve for wrapping a package, the method comprising
- providing a plywood sheet having a thickness in the range of 0.1-2.0 mm, such as 0.4-1.0 mm, and comprising at least two plies,
- cutting at least one fold line to the plywood sheet by cutting through less than all the plies of the plywood sheet.

2. The method of claim 1, comprising cutting at least one fold line to the sheet by cutting through only an outermost ply of the plywood sheet.

3. The method of claim 1 or 2, comprising die-cutting the at least one fold line, preferably also die-cutting the blank from the plywood sheet.

4. The method of any of the preceding claims, wherein the at least one fold line is perpendicular to the grains of the outermost ply.

5. The method of any of the preceding claims, wherein the plywood contains fiber reinforced adhesive between the plies, such as adhesive containing pulp and textile fibers or fibers selected from hemp fibers, flax fibers, cotton fibers and cellulosic fibers or combinations thereof.

6. The method of claim 5, wherein the plywood contains an adhesive layer and a fiber reinforced adhesive layer between two plies, preferably wherein the fiber reinforced adhesive layer is not cut.

7. The method of any of the preceding claims, wherein the plywood sheet comprises 2-5 plies, such as 3-5 plies.

8. The method of any of the preceding claims, comprising printing, embossing, debossing and/or hot foiling the plywood sheet.

9. A blank for forming a packaging plywood sleeve for wrapping a package, the blank comprising a plywood sheet, the ends of the plywood sheet being joinable together to provide a continuous plywood sleeve, wherein the plywood sheet has a thickness in the range of 0.1-2.0 mm, such as 0.4-1.0 mm, and wherein the plywood sheet comprises at least one fold line obtained by cutting through less than all the plies of the plywood sheet.

10. The blank of claim 9, wherein the plywood sheet comprises at least one fold line obtained by cutting through an outermost ply of the plywood sheet, preferably wherein the at least one fold line is perpendicular to the grains of the outermost ply.

11. The blank of claim 9 or 10, wherein the plywood contains fiber reinforced adhesive between the plies, such as adhesive containing pulp and textile fibers or fibers selected from hemp fibers, flax fibers, cotton fibers and cellulosic fibers, or combinations thereof, such as wherein the plywood contains an adhesive layer and a fiber reinforced adhesive layer between two plies, preferably wherein the fiber reinforced adhesive layer is not cut.

12. The blank of any of the claims 9-11, wherein the plywood sheet comprises 2-5 plies, such as 3-5 plies.

13. The blank of any of the claims 9-12 obtained with the method of any of the claims 1-8.

14. A packaging plywood sleeve for wrapping a package comprising a plywood sheet, the ends of the plywood sheets being joined together to provide a continuous plywood sleeve, wherein the plywood sheet comprises at least one fold line, obtained from the blank of any of the claims 9-13.

15. A method for manufacturing a packaging plywood sleeve for wrapping a package, the method comprising
- providing the blank (10) of any of the claims 9-13,
- folding at the at least one fold line (12, 22), and
- joining the ends (14, 16) of the blank together to obtain the packaging plywood sleeve.
